Europäisches Patentamt

European Patent Office

Office européen des brevets

(19)

(11) **EP 0 938 837 A1**

(12) **EUROPÄISCHE PATENTANMELDUNG**

(43) Veröffentlichungstag:
01.09.1999 **Patentblatt 1999/35**

(51) Int Cl.[6]: **A01D 33/10**, G01G 11/12

(21) Anmeldenummer: **99103805.0**

(22) Anmeldetag: **26.02.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.02.1998 DE 19808148**

(71) Anmelder: **Kromer, Karl-Hans, Prof. Dr. Ing.
53115 Bonn (DE)**

(72) Erfinder: **Kromer, Karl-Hans, Prof. Dr. Ing.
53115 Bonn (DE)**

(74) Vertreter: **Dreiss, Fuhlendorf, Steimle & Becker,
Patentanwälte
Postfach 10 37 62
70032 Stuttgart (DE)**

(54) **Bestimmung des Erdanteils in Förderströmen landwirtschaftlicher Güter**

(57) Verfahren und Vorrichtung zur Ermittlung des Erdmasseanteils in Förderströmen landwirtschaftlicher Produkte wie Zuckerrüben und Kartoffeln, bei dem der Massestrom $m_K$ und der Volumenstrom $v_K$ auf einer Förderkette erfasst und durch Vergleich mit einer Standardschüttdichte $D_s$ der Masseanteil insbesondere Erd- und/oder Steinanteil bestimmt wird, wobei gilt:

$$EA \% = (m_K - v_K \times D_s) \times 100 : m_K$$

Fig. 1

EP 0 938 837 A1

**Beschreibung**

Die vorliegende Erfindung betrifft ein Verfahren und eine Vorrichtung zur Bestimmung von Masseanteilen von Störstoffen bei Förderströmen. Die Erfindung bezieht sich insbesondere auf ein Messverfahren und eine Vorrichtung zur Bestimmung des Erdanteiles in Förderströmen landwirtschaftlicher Güter, wie Zuckerrüben oder Kartoffeln, auf Siebförderketten oder Förderbändern.

Die vom Feld mit dem Erntegut abtransportierte oder auf Transportfahrzeugen verladene und in Verarbeitungsfabriken angelieferte Erdmasse, nebst Steine, in Haufwerken landwirtschaftlicher Güter ist aus ökonomischen und ökologischen Gründen unerwünscht. Diese Erdmasse wird als Anteil an der Gesamtmasse angegeben und als Erdanteil bezeichnet.

In der Bundesrepublik Deutschland verursacht z. B. bei der Zuckerrübenbergung der Erdanteil von durchschnittlich 12 % einen unerwünschten Erdtransport in die Zuckerfabriken von jährlich ca. 3 Millionen Tonnen und verursacht dadurch Kosten von über 100 Millionen DM pro Jahr. Für eine Optimierung des Reinigungsprozesses in Erntemaschinen und Reinigungsladern sowie die Bewertung und Senkung des Erdanteiles ist die reproduzierbare Echtzeitmessung des Erdanteils in Gutströmen erforderlich.

Zur Beurteilung der Arbeitsqualität von Ernte- und Ladegeräten, zur Ermittlung der Zusammensetzung von Haufwerken in Feldrandladern, zur Vermeidung der Überladung von Transportfahrzeugen sowie zur Beurteilung und Vergütung sollten die Erdanteilbestimmungen in allen Prozessphasen von Ernte, Lagerung und Anlieferung möglich sein. Die ungleiche Verteilung der Erde und Steine im Gutstrom erforderte bisher für eine statistisch gesicherte Aussage eine Vielzahl von Probennahmen mit anschließender Waschprobe.

Problematisch ist bislang die Echtzeitvermessung auf Förderketten mit unterschiedlichem Basisprofil der Kette und wechselndem Förderdurchsatz des Gutstromes.

Der Erfindung liegt die Aufgabe zugrunde, den Erdanteil von Haufwerken, speziell von landwirtschaftlichen Gütern und Erde, Steinen usw. auf Förderketten und Förderbändern zu bestimmen.

Diese Aufgabe wird erfindungsgemäß durch ein Verfahren gemäß Patentanspruch 1 und eine Vorrichtung gemäß Patentanspruch 10 gelöst.

Die Erfindung bietet ein Verfahren zur Bestimmung von Masseanteilen von Störstoffen bei Förderströmen, insbesondere zur Bestimmung des Erdanteils in Haufwerkströmen landwirtschaftlicher Güter an, bei dem die Fördergeschwindigkeit, das zeitlich veränderliche Fördergutprofil und Gewicht des beförderten Guts erfasst werden, daraus der Massestrom und der Volumenstrom ermittelt werden und der genannte Masseanteil, bzw. Erdanteil, durch Vergleich des ermittelten Massestromes mit einem errechneten Massestrom der aus dem ermittelten Volumenstrom und einer Standardschüttdichte ohne Störstoffe errechnet wird, bestimmt wird.

Besonders zeitsparend wird die Oberfläche des Haufwerks auf dem Förderer durch einen Messstrahl abgetastet und erfasst. Durch die erfasste Oberflächenkontur wird die Querschnittsfläche des Gutstromes errechnet. Daraus ergibt sich der Volumenstrom bzw. Volumendurchsatz.

Dem Verfahren liegen der physikalische Zusammenhang Massestrom = Volumenstrom x Dichte und die unterschiedlichen Roh- und Schüttdichten der landwirtschaftlichen Güter mit oder ohne Beimengungen von Erde, Steinen, Gras, Blätter, usw., zugrunde.

Bezeichnet man mit

$v_K$ = Fördergeschwindigkeit des Gutstromes in m/s (z. B. Laufgeschwindigkeit der Förderkette)
$A_K$ = Querschnittsfläche des Gutstromes in m$^2$
$V_K$ = Volumenstrom der landwirtschaftlichen Güter, inclusive Beimengungen wie Erde und Steine in m$^3$/s
$m_K$ = Massestrom von landwirtschaftlichen Gütern und Beimengungen in kg/s
$D_K$ = Standardschüttdichte des landwirtschaftlichen Gutes mit Beimengungen in kg/m$^2$
$D_S$ = Standardschüttdichte des landwirtschaftlichen Gutes ohne Beimengungen in kg/m$^3$,

dann gelten folgende Gleichungen:

$$V_K = A_K \times v_K$$

$$m_K = A_K \times v_K \times D_K$$

und der Störstoffanteil bzw. Erdanteil wird bestimmt als

$$EA \% = (m_K - A_K \times v_K \times D_S) \times 100/m_K.$$

Bevorzugte Ausführungsformen und Weiterbildungen der Erfindung ergeben sich aus den Unteransprüchen.

Zur Durchführung des Verfahrens können gleichzeitig die Geschwindigkeit des Fördermittels, die Gewichtskraft auf dem Fördermittel über eine Waage (Ketten- oder Bandwaage) und das Fördervolumen über eine Volumenmesseinrichtung über dem Fördermittel ermittelt werden. Die Volumenbestimmung kann mechanisch, optisch oder elektrooptisch erfolgen. Zweckmäßigerweise ist eine EDV-Anlage vorgesehen, durch die die von der Waage und der Volumenmesseinrichtung erfassten Werte aufgenommen und zusammen mit weiteren vorgegebenen Werten wie Standardschüttdichte, Profil des Fördermittels, Leergewicht und Nettoprofil des Fördermittels zur Echtzeitvermessung des Erdanteils ausgewertet werden. Dabei können ggf. noch andere nützliche Messwerte gleich oder später miterfasst und ausgewertet werden, beispielsweise Standort, ermittelte Stoffwerte wie Zuckergehalt des Haufwerkes, ein Grünwert für den Blattanteil, usw. In Verbindung mit der Kurzerkennung des Fördermittels auf Erntemaschinen oder Reinigungsladern, z. B. durch Satellitensysteme GPS, können die Geodaten in Geoinformationssystemen abgelegt und zum Transportmanagement benutzt werden.

Die erfindungsgemäße Vorrichtung wird nun anhand einer Ausführungsform und der beigefügten Skizze näher erläutert. Es zeigt:

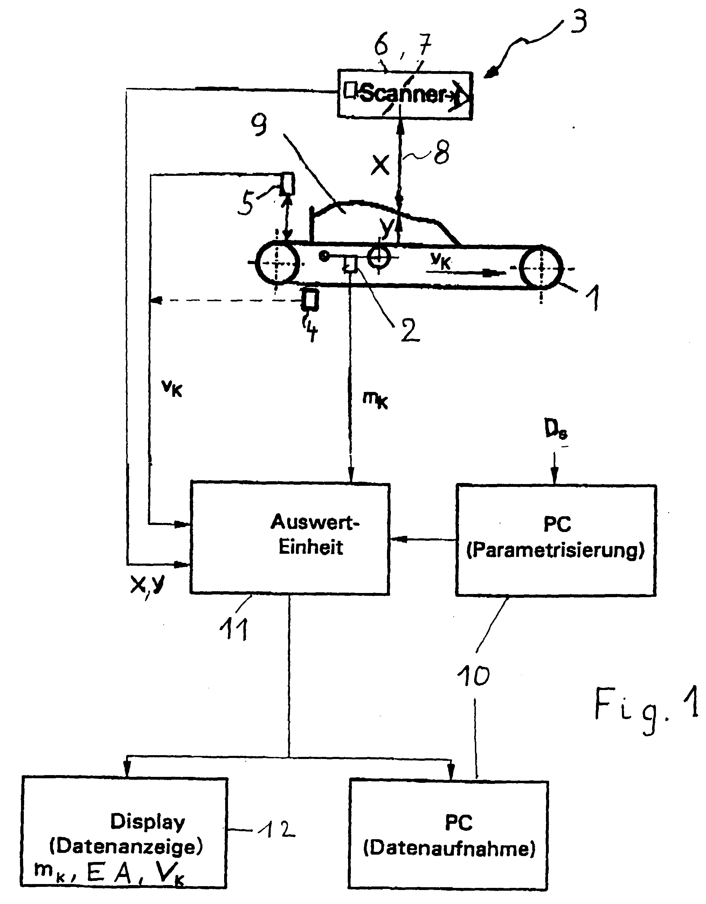

Figur 1    eine schematische Seitenansicht einer Messanordnung, mit der Hardwareanordnung für ein Laserscannersystem zur Volumenstrombestimmung und Auswertung.

Unter einem Fördermittel 1 ist eine Wiegevorrichtung 2 der Gewichtskraft angeordnet. Die Bestimmung der Gewichtskraft erfolgt zweckmäßigerweise mit elektronischen Kraftaufnehmern, z. B. nach der DMS-Technik. Mit Abstand über dem Fördermittel ist eine Volumenmessvorrichtung 3 angeordnet. Diese weist einen Emitter, beispielsweise einen Diodenlaser 8, dessen Laserstrahl über einen internen Drehspiegel 7 auf die Gutstromoberfläche umgelenkt wird, auf. Ein gepulster Laserstrahl wird als Messfühler ausgesendet. Trifft er auf das Schüttgut 9 oder das Band, wird er reflektiert und im Detektor 6 des Scanners registriert. Die Zeit vom Aussenden bis zum Empfangen des Impulses ist direkt proportional zur Entfernung X zwischen Scanner und Schüttgut. Durch den internen Drehspiegel wird der gepulste Laserstrahl bewegt und so die Umgebung fächerförmig, in Querrichtung Y des Förderbandes abgetastet. Der von der Oberfläche des Haufwerkes reflektierte Laserstrahl wird wiederum über den Drehspiegel zum Detektor 6 reflektiert.

Aus der Abfolge der empfangenen Impulse wird die Kontur des Objektes berechnet. Die zweidimensionalen Konturdaten X, Y des Scanners werden an die Auswerteeinheit mit Prozessrechner 11 über eine Datenschnittstelle gesendet. Unter Hinzunahme der externen Größen wie Bandgeschwindigkeit $v_K$, die inkremental durch Impulsgeber 4 am Band oder als Analogwert ermittelt werden kann, und unter ergänzender Berücksichtigung der Abmessungen des Fördermittels, wird der Volumenstrom errechnet.

Parameter wie $D_S$ oder die Daten des Fördermittels im Leerzustand können über eine Dateneingabe, z. B. einen PC (10), eingegeben werden, oder im Leerlauf ermittelt und in einer Datenaufnahmeeinheit; z. B. den PC (10), gespeichert werden.

Die Roh- und Schüttdichten von Gütern, Beimengungen und Fremdkörpern werden in einem integrierten Rechenalgorithmus, der auf dem Prozessrechner der Auswerteeinheit (11) abläuft, berücksichtigt.

Die erfindungsgemäße Mess- und EDV-Vorrichtung erlaubt es, alle Durchsatzdaten, wie z. B. EA %, $m_K$, $V_K$, usw. als Echtzeitdaten im Zeitablauf zu errechnen, aufzunehmen, zu speichern und anzuzeigen. Die Daten können auch in integrierter Form nach Ablauf eines Arbeitsganges, z. B. einem Ladevorgang, ausgewertet und angezeigt werden.

Die Fördermittelgeschwindigkeit kann auch durch einen Radarsensor 5 über dem Band, welcher mit dem Scanner eine Einheit bilden kann, gemessen werden.

Durch Ausrüstung mit Ortungs- und Geoinformationssystemen, z. B. GPS und GIS, ist die Durchsatzmessung zur teilflächenbezogenen Landbewirtschaftung geeignet.

## Patentansprüche

1.  Verfahren zur Bestimmung von Masseanteilen von Störstoffen bei Förderströmen, insbesondere zur Bestimmung des Erdanteils (EA) in Haufwerkströmen landwirtschaftlicher Güter, bei dem die Fördergeschwindigkeit ($v_K$), das zeitlich veränderliche Fördergutprofil (X, Y) und Gewicht des beförderten Guts, erfasst werden, daraus der Massestrom ($m_K$) und der Volumenstrom ($V_K$) ermittelt werden und der genannte Masseanteil (EA) durch Vergleich des ermittelten Massestromes ($m_K$) mit einem errechneten Massestrom ($V_K$ x $D_s$) der aus dem ermittelten Volumenstrom $V_K$ und einer Standardschüttdichte ($D_s$) errechnet wird, bestimmt wird.

2.  Verfahren nach Anspruch 1, dadurch gekennzeichnet, dass die Fördergutprofilerfassung und die Gewichtsmessung gleichzeitig durchgeführt werden.

3.  Verfahren nach Anspruch 2, dadurch gekennzeichnet, dass die Massestrom und Profilermittlung als Differentialmessungen erfolgen, wobei Leergewicht und Nettoprofil des Fördermittels als Fördermittelkennwerte vorgebbar sind oder in einem Kalibriergang vorgegeben werden.

4.  Verfahren nach einem der Ansprüche 1 bis 3, dadurch gekennzeichnet, dass die Oberfläche des Haufwerkstromes durch einen Messstrahl abgetastet und die Oberflächenkontur erfasst wird.

5.  Verfahren nach einem der Ansprüche 1 bis 4, dadurch gekennzeichnet, dass als Fördermittel eine Kette verwendet wird.

6.  Verfahren nach einem der Ansprüche 1 bis 4, dadurch gekennzeichnet, dass als Fördermittel eine Siebförderkette verwendet wird.

7.  Verfahren nach einem der Ansprüche 1 bis 4, dadurch gekennzeichnet, dass als Fördermittel ein Förderband verwendet wird.

8. Verfahren nach einem der Ansprüche 1 bis 7, dadurch gekennzeichnet, dass das Fördermittel mit einer Winkelmessvorrichtung versehen ist, so dass der Massestrom normiert mit Hilfe einer trigonometrischen Funktion errechnet wird.

9. Verfahren nach irgendeinem der vorhergehenden Ansprüche, dadurch gekennzeichnet, dass die Messdaten und Fördermittel- bzw. Fahrzeugkennwerte in Geoinformationssysteme übertragen werden.

10. Vorrichtung zur Durchführung des Verfahrens nach einem der Ansprüche 1 bis 9, dadurch gekennzeichnet, dass eine Waage (2) vorgesehen ist für die Erfassung des Gewichts des Förderguts (9), dass oberhalb der Waage (2) eine Profilmessvorrichtung (3) für die Erfassung des Fördergutprofils (X, Y) angeordnet ist und dass ferner eine EDV-Anlage (10, 11) vorgesehen ist, durch die die von der Waage (2), der Fördergeschwindigkeitsmessung (4, 5) und der Fördergutprofilmessung (3) erfassten Werte aufgenommen und zusammen mit vorgegebenen Werten, ausgewertet werden.

11. Vorrrichtung nach Anspruch 10, dadurch gekennzeichnet, dass die Profilmessvorrichtung (3) einen Messstrahl emittierenden Emitter, vorzugsweisen einen Laser (8) und einen den Messstrahl auf das Haufwerk umlenkenden Drehspiegel (7) aufweist und dass durch den Drehspiegel die reflektierten Messstrahlen auf einen Detektor (6) zurücklenkbar sind.

12. Vorrichtung nach Anspruch 11, dadurch gekennzeichnet, dass als Detektor ein Scanner vorgesehen ist, dass die vom Scanner erfassten Messwerte (X, Y) zur EDV (10, 11) weitergeführt und dort ausgewertet werden.

13. Vorrichtung nach einem der Ansprüche 10 bis 12, dadurch gekennzeichnet, dass die Fördergeschwindigkeit mittels induktiver Impulsgeber (4) inkremental gemessen wird.

14. Vorrichtung nach einem der Ansprüche 10 bis 12, dadurch gekennzeichnet, dass die Fördergeschwindigkeit optisch mittels einem Radarsensor (5) gemessen wird.

15. Vorrichtung nach einem der Ansprüche 10 - 14, dadurch gekennzeichnet, dass sie mithilfe eines integrierten Rechenalgorithmus, der auf einem Prozessrechner (11) abläuft, nach dem Messvorgang den Erdanteil auf einer Datenanzeigevorrichtung (12) angibt.

16. Vorrichtung nach einem der Ansprüche 10 bis 15, dadurch gekennzeichnet, dass die mithilfe eines Rechenalgorithmus, der auf einem Prozessrechner (11) abläuft, in Echtzeit erhaltenen Daten ($m_K$, $V_K$, EA%, $D_K$) in einer Datenaufnahme-Einheit (10) gespeichert werden.

17. Vorrichtung nach einem der Ansprüche 10 bis 16, dadurch gekennzeichnet, dass sie mit Mitteln zur Verbindung zu Ortungs- und Geoinformationssystemen ausgerüstet ist.

Fig. 1

Display (Datenanzeige)
$m_K$, $EA$, $V_K$

12

PC (Datenaufnahme)

Auswert-Einheit

11

X,y

$v_K$

$m_K$

PC (Parametrisierung)

10

$D_s$

Scanner

3

6 , 7

9

5

X

8

y

$v_K$

4

2

1

**Europäisches Patentamt**

## EUROPÄISCHER RECHERCHENBERICHT

Nummer der Anmeldung

EP 99 10 3805

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE 41 35 329 A (KROMER KARL HANS PROF DR ING) 29. April 1993<br>* Spalte 2, Zeile 47 - Spalte 3, Zeile 6; Abbildungen 1,2 * | 1,10 | A01D33/10<br>G01G11/12 |
| A | | 4,11,12,<br>15,16 | |
| Y | EP 0 791 287 A (KLEINE FRANZ MASCHF) 27. August 1997<br>* Zusammenfassung; Abbildung 1 * | 1,10 | |
| A | DE 26 11 344 A (SCHENCK AG CARL) 22. September 1977<br>* Seite 5, Zeile 22 - Zeile 25; Abbildung * | 13 | |
| A | DE 94 13 974 U (NIEWOEHNER KG MASCHF) 8. Dezember 1994<br>* Anspruch 1; Abbildung 1 * | 5 | |
| A | EP 0 723 740 A (MASSEY FERGUSON MFG) 31. Juli 1996<br>* Zusammenfassung; Abbildung 1 * | 9,17 | **RECHERCHIERTE SACHGEBIETE (Int.Cl.6)**<br><br>A01D<br>G01G |

Der vorliegende Recherchenbericht wurde für alle Patentansprüche erstellt

| Recherchenort | Abschlußdatum der Recherche | Prüfer |
|---|---|---|
| DEN HAAG | 26. Mai 1999 | Ganci, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 10 3805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-1999

| Im Recherchenbericht angeführtes Patentdokument | Datum der Veröffentlichung | Mitglied(er) der Patentfamilie | Datum der Veröffentlichung |
|---|---|---|---|
| DE 4135329 A | 29-04-1993 | KEINE | |
| EP 0791287 A | 27-08-1997 | DE 19606601 A<br>CZ 9700503 A<br>HU 9700504 A<br>PL 318544 A<br>SK 23197 A | 28-08-1997<br>17-09-1997<br>28-01-1998<br>01-09-1997<br>03-06-1998 |
| DE 2611344 A | 22-09-1977 | CH 600313 A | 15-06-1978 |
| DE 9413974 U | 08-12-1994 | KEINE | |
| EP 0723740 A | 31-07-1996 | GB 2297468 A,B | 07-08-1996 |

EPO FORM P0461

Für nähere Einzelheiten zu diesem Anhang : siehe Amtsblatt des Europäischen Patentamts, Nr. 12/82